# EUROPEAN PATENT APPLICATION

(11) **EP 3 508 857 A1**
(43) Date of publication of application: **10.07.2019**
(21) Application number: 17846127.3
(22) Date of filing: 15.08.2017
(51) Int. Cl.: G01N 35/08, G01N 37/00

(54) **ATTACHMENT FOR LIQUID INJECTION**

(30) Priority: 31.08.2016 JP 2016170361
(71) Applicant: NOK Corporation, Minato-ku Tokyo 105-8585 (JP)
(72) Inventor: MUROTA Yuki, Fujisawa-shi Kanagawa 251-0042 (JP)
(74) Representative: TBK
(86) International application number: PCT/JP2017/029382
(87) International publication number: WO 2018/043119

(57) **Abstract**

An object of the present invention is to provide a liquid injection attachment configured to sufficiently absorb a dimension error of a liquid injecting implement distal end section or dimensional variation due to a positioning (attachment) error to the liquid injecting implement distal end section. The object is attained by the liquid injection attachment formed into a cylindrical body having, in a rear end portion 3, an insertion opening 2 for receiving a distal end section 101 of a liquid injecting implement 100 inserted thereinto and a liquid flow outlet 5 in a front end portion 4. The liquid injection attachment is provided with a lip portion 7 of an annulus shape that bulges on the periphery of the liquid flow outlet 5, and at least one reduced-diameter portion 80 is formed on an outer cylindrical surface of the cylindrical body.

## Description

### TECHNICAL FIELD

The present invention relates to a liquid injection attachment. In particular, the present invention relates to a liquid injection attachment that can be used to inject liquid into an inlet in a simple way only by mounting it to a distal end section of a liquid injecting implement without deformation or damages of the liquid injecting implement while preventing liquid leakage. The liquid injection attachment is configured to sufficiently absorb a dimension error of a liquid injecting implement distal end section or dimensional variation due to a positioning (attachment) error to the liquid injecting implement distal end section.

### BACKGROUND

Attention has been drawn to micro-fluid chips known under the names of Micro Total Analysis Systems (µTAS) or Lab-on-a-chips. The micro-fluid chips have microstructures such as microchannels that form a flow channel of a predetermined shape in a substrate and ports, and allow for various operations such as chemical reactions, synthesis, purification, extraction, formation and/or analysis of substances in the microstructures.

The micro-fluid chips are expected to find a wide variety of applications in medical-related markets such as genome analysis, genome-based drug discovery, protein analysis, preventive diagnosis, clinical diagnosis, or drug screening, and chemical analysis, food analysis, or environmental monitoring. When a micro-fluid chip is used, it uses less samples and reagents compared to conventional approaches, a micro-fluid chip can be disposable, and it reduces significant amount of time for analytical processing. In other words, test costs can be reduced, and tests can be expedited by using a micro-fluid chip.

To use a micro-fluid chip, an operation of injecting liquid such as reagent into a microchannel in the micro-fluid chip is required. The injection of liquid into the microchannel accomplishes from an inlet of the micro-fluid chip through a liquid injecting implement (micropipette, syringe, or tips attached to them) or a liquid feeding tube. At this time, a joint is needed to connect and fix the liquid injecting implement or the liquid feeding tube to the inlet of the micro-fluid chip.

In such a joint, the applicant has proposed a liquid injection attachment detachably mounted to a liquid injecting implement for injecting liquid into an inlet (Patent Document 1). The liquid injection attachment has a liquid flow outlet in a front end portion, and is provided with, in a rear end portion, an attachment body of a cylindrical shape consisting of a synthetic resin material, the attachment body having an insertion opening into which a liquid injecting implement distal end section is inserted, and a gasket consisting of an elastic material provided around the liquid flow outlet of the attachment body.

The liquid injection attachment can inject liquid into the inlet in a simple way only by mounting it to the liquid injecting implement distal end section without deformation or damages of the liquid injecting implement while preventing liquid leakage.

### PRIOR ART DOCUMENTS

### PATENT DOCUMENTS

Patent Document 1: JP-A-2015-199028

### SUMMARY OF THE INVENTION

### PROBLEM TO BE SOLVED BY THE INVENTION

Meanwhile, in the liquid injection attachment such as those described in Patent Document 1, it is preferable that a dimension error of the liquid injecting implement, positioning (attachment) error or the like could be absorbed. In other words, even when there is an error in the size, the length, or the shape of the liquid injecting implement distal end section, or an error or a misalignment in an attachment position to the liquid injecting implement distal end section, it is necessary to absorb the error by deformation of a gasket and to reliably seal the periphery of the liquid injecting implement distal end section and the inlet.

It is also necessary to absorb dimensional variation due to mismounting such as when the liquid injection attachment is incorrectly manipulated to mount to the liquid injecting implement distal end section, for example, when the liquid injecting implement distal end section is inclined with respect to and inserted into the insertion opening, or when the liquid injecting implement distal end section is insufficiently inserted into the insertion opening.

In order to satisfy such needs, the deformability of the gasket needs to be increased. However, it is not easy to increase the deformability of the gasket because there is a constraint on the distance between the liquid injecting implement distal end section and the inlet. In other words, although the thickness of the gasket in the axial direction can be increased to increase the deformability of the gasket, the thickness of the gasket cannot be increased infinitely because the direction between the liquid injecting implement distal end section and the inlet is predefined.

Therefore, an object of the present invention is to provide a liquid injection attachment that can be used to inject liquid into an inlet in a simple way only by mounting it to a distal end section of a liquid injecting implement without deformation or damages of the liquid injecting implement while preventing liquid leakage. The liquid injection attachment is configured to sufficiently absorb a dimension error of a liquid injecting implement distal end section or dimensional variation due to a positioning (attachment) error to the liquid injecting implement distal end section.

Other objects of the present invention will be apparent from the description below.

### MEANS FOR SOLVING PROBLEM

The above object can be attained by embodiments described below.
1. A liquid injection attachment, wherein the liquid injection attachment is formed into a cylindrical body having, in a rear end portion, an insertion opening for receiving a distal end section of a liquid injecting implement inserted thereinto and a liquid flow outlet in a front end portion, the liquid injection attachment comprises a lip portion of an annulus shape that bulges on periphery of the liquid flow outlet, and at least one reduced-diameter portion is formed on an outer cylindrical surface of the cylindrical body.
2. The liquid injection attachment according to said 1, wherein the liquid injection attachment is integrally formed of a rubber-like elastic body.
3. The liquid injection attachment according to said 1 or 2, wherein the rubber-like elastic body is any of silicone rubber, fluororubber, acrylic rubber, nitrile rubber, and butyl rubber.

### EFFECT OF THE INVENTION

According to the present invention, there can be provided a liquid injection attachment that can be used to inject liquid into an inlet in a simple way only by mounting it to a distal end section of a liquid injecting implement without deformation or damages of the liquid injecting implement while preventing liquid leakage. The liquid injection attachment is configured to sufficiently absorb a dimension error of a liquid injecting implement distal end section or dimensional variation due to a positioning (attachment) error to the liquid injecting implement distal end section.

### BRIEF DESCRIPTION OF DRAWINGS

Figure 1 is a side view illustrating a liquid injection attachment according to an embodiment of the present invention.
Figure 2 is a sectional view in which the liquid injection attachment according to the embodiment of the present invention is used for a syringe.
Figure 3 is a sectional view in which a liquid injection attachment according to an embodiment of the present invention is used for a syringe and liquid is injected.
Figure 4 is a sectional view in which the liquid injection attachment according to the embodiment of the present invention is used for a micropipette and liquid is injected.
Figure 5(a) is a side view illustrating the liquid injection attachment according to the embodiment of the present invention inclined with respect to a syringe, Figure 5(b) is a side view illustrating the inclined liquid injection attachment incorrectly inserted into the syringe, Figure 5(c) is a side view in which the incorrectly inserted liquid injection attachment is used, and Figure 5(d) is a side view in which the incorrectly inserted liquid injection attachment is used.
Figure 6 is a sectional view in which the liquid injection attachment according to the embodiment of the present invention is used for a syringe and liquid is injected.
Figure 7 is a side view illustrating a configuration of a liquid injection attachment according to a further embodiment of the present invention.
Figure 8 is an illustration of an example of a method for injecting liquid.

### DESCRIPTION OF THE PREFERRED EMBODIMENTS

Embodiments of the present invention will now be described with reference to drawings.

### [Configurations of Liquid Injection Attachment]

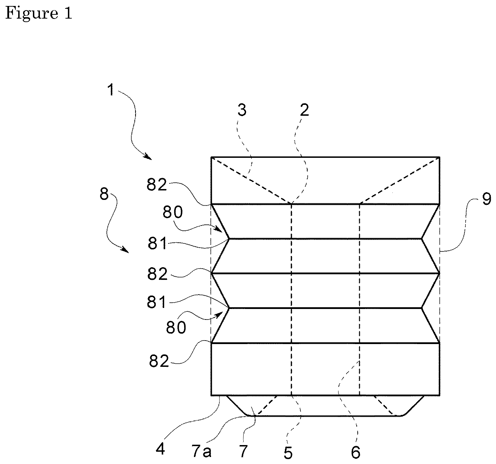

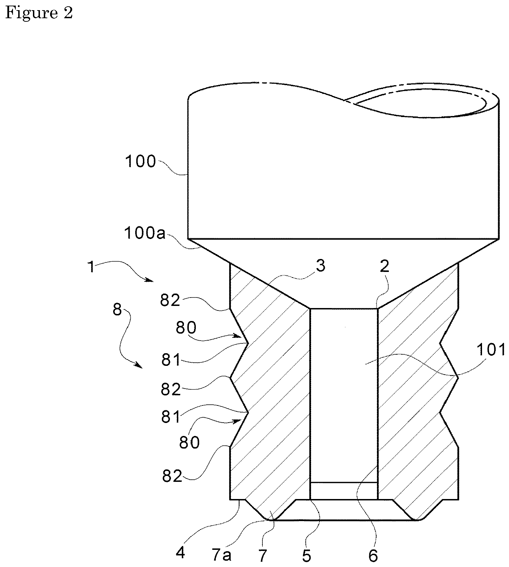

Figure 1 is a side view illustrating a liquid injection attachment according to an embodiment of the present invention, and Figure 2 is a sectional view in which the liquid injection attachment according to the embodiment of the present invention is used for a syringe.

As illustrated in Figure 1, a liquid injection attachment 1 is formed as a cylindrical body having an outer cylindrical surface 9. An insertion opening 2 is provided on a rear end portion 3 of the cylindrical body and a liquid flow outlet 5 is provided on a front end portion 4 of the cylindrical body. A through-hole penetrates from the insertion opening 2 to the liquid flow outlet 5. The through-hole has an inner cylindrical surface 6 of the liquid injection attachment 1, and allows a distal end section 101 of a syringe 100 to be inserted thereinto.

The inner cylindrical surface 6 is in a cylindrical shape having a constant inside diameter.

The term "front end portion" as used herein refers to an end on the side where liquid is discharged from the liquid injection attachment 1, and "rear end portion" refers to an end axially opposite from the front end portion. In Figures 1 to 8, an end on the downside corresponds to the "front end portion", and an end on the upside corresponds to the "rear end portion".

The liquid injection attachment 1 is used while it is detachably mounted to the distal end section 101 of a cylindrical shape of the syringe 100, which serves a liquid injecting implement. The syringe 100 is used to take in and inject a minute amount of liquid on the order of microliters. The liquid injection attachment 1 is not limited to the syringe 100 and is used for a variety of liquid injecting implements. For example, the liquid injection attachment 1 may be used for a general pipette, a micropipette, or the like. In addition, the liquid injection attachment 1 may be detachably mounted to a distal end section of a pipette tip attached to a distal end section of a micropipette.

The syringe 100 and the micropipette that may be used have the distal end section 101 formed of a thermoplastic resin by injection molding or the like. Description will mainly be made herein below to the case in which the liquid injection attachment 1 is detachably mounted to the distal end section 101 of the syringe 100.

When the liquid injection attachment 1 is to be mounted to the syringe 100, the distal end section 101 of the syringe 100 is inserted from and mounted to the insertion opening 2 of the liquid injection attachment 1. This allows liquid entering the syringe 100 to be discharged from the liquid flow outlet 5 of the liquid injection attachment 1 through the distal end section 101 and the through-hole. At this time, the inner cylindrical surface 6 extending from the insertion opening 2 to the liquid flow outlet 5 serves as a seal portion against the distal end section 101 of the syringe 100.

In order to achieve better mountability to the distal end section 101 of the syringe 100, the rear end portion 3 (the peripheral portion of the insertion opening 2) preferably has a funnel-like, chamfered shape. The funnel-like shape may also correspond to a conical shape of a barrel distal end face 100a of the syringe 100, as illustrated in Figure 2.

The liquid injection attachment 1 has a bellows-like portion 8 on the outer cylindrical surface 9. In the bellows-like portion 8, at least one reduced-diameter portion 80 is formed on the outer cylindrical surface 9. The reduced-diameter portion 80 refers to a spacing formed such that the diameter of the outer cylindrical surface 9 is reduced, and in the reduced-diameter portion 80, such a spacing is formed by cutting out the outer cylindrical surface 9 in the radial direction into an approximately triangular shape. As illustrated in Figures 1 and 2, an element having the shortest diameter formed by cutting refers to a reduced-diameter deepest portion 81. In addition, an element having the same diameter as the outer cylindrical surface 9 refers to a non-reduced-diameter portion 82.

In the embodiment illustrated in Figures 1 and 2, the reduced-diameter portions 80 and the non-reduced-diameter portions 82 are alternately formed on the outer cylindrical surface 9. As described above, since the reduced-diameter portions 80 and the non-reduced-diameter portions 82 are alternately formed in a continuous manner, these are referred to as the bellows-like portion 8 in the present invention. The liquid injection attachment 1 is easy to deform in the cylindrical axis direction (compression) and deformation in a direction in which the cylindrical axis is bent (curved) is also facilitated, because at least one reduced-diameter deepest portion 81 is formed on the outer cylindrical surface 9.

As illustrated in Figures 1 and 2, the liquid injection attachment 1 may be provided with a lip portion 7 of an annulus shape that bulges on the periphery of the liquid flow outlet 5 (front end portion 4). The lip portion 7 may by a raised strip of an annulus ring shape, for example.

The liquid injection attachment 1 is preferably integrally formed of a rubber-like elastic body as a whole. Specific materials for the rubber-like elastic body may be selected as appropriate in consideration of a type or the like of liquid injected from the syringe 100, and typically include silicone rubber, fluororubber, acrylic rubber, nitrile rubber, butyl rubber, and the like. A method for forming the liquid injection attachment 1 includes, but not particularly limited to, compression molding, injection molding, and the like.

### [Liquid Injection Attachment in Use]

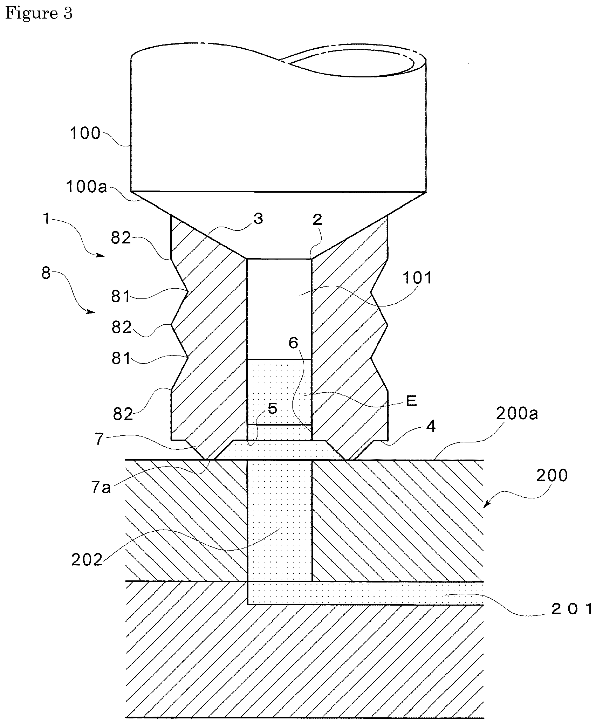

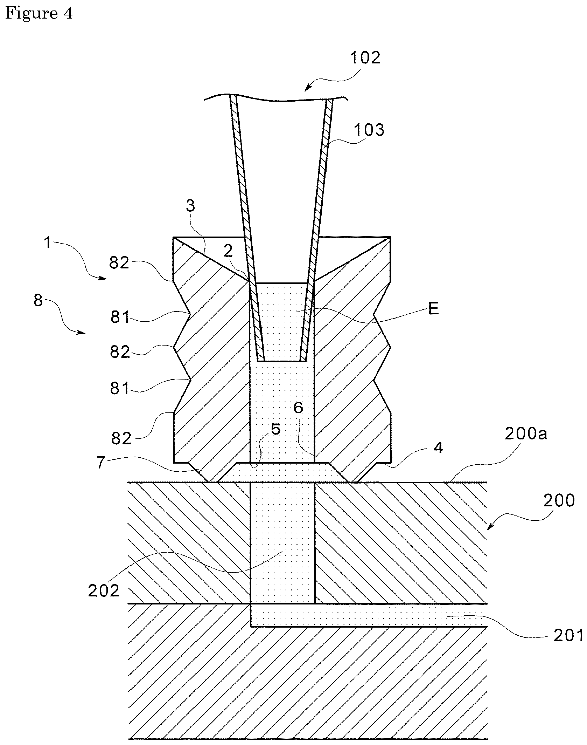

Description will now be made to the liquid injection attachment 1 in use based on Figures 3 and 4 with reference to the case in which liquid E is injected from an inlet 202 into a microchannel 201 formed in the micro-fluid chip 200 as an example.

Figure 3 is a sectional view in which a liquid injection attachment according to one embodiment of the present invention is used for a syringe and liquid is injected, and Figure 4 is a sectional view in which the liquid injection attachment according to one embodiment of the present invention is used for a micropipette and liquid is injected.

As illustrated in Figures 3 and 4, the micro-fluid chip 200 has microstructures such as the microchannel 201 that forms a flow channel of a predetermined shape in a substrate and ports. The liquid is injected into the microchannel 201 from the inlet 202 of the micro-fluid chip 200.

As illustrated in Figure 3, the distal end section 101 of the syringe 100 that has taken in and holds the liquid E is inserted from the insertion opening 2 such that the liquid injection attachment 1 is mounted to the distal end section 101. The distal end section 101 of the syringe 100 has approximately the same diameter as that of the inner cylindrical surface 6, which serves as a loose fit or an interference fit to bring the outer peripheral surface into contact with the inner cylindrical surface 6 for reliably holding the liquid injection attachment 1. At this time, the inner cylindrical surface 6 is in close contact with the outer peripheral surface of the distal end section 101 of the syringe 100, serving as a seal portion.

As illustrated in Figure 4, in the case in which a distal end section 103 of a micropipette 102 that has taken in and holds the liquid E is inserted into the insertion opening 2, since the distal end section 103 of the micropipette 102 has a tapered shape progressively diametrically expanding from the distal end section toward the base end side, the stronger the distal end section 103 is inserted into the insertion opening 2, the more reliably the liquid injection attachment 1 is held. At this time, the inner cylindrical surface 6 is in close contact with the outer peripheral surface of the distal end section 103 of the micropipette 102, serving as a seal portion.

In this case, the inner cylindrical surface 6 extending from the insertion opening 2 to the liquid flow outlet 5 may also be in a funnel-like tapered shape having the inside diameter that reduces progressively or in a step wise from the insertion opening 2 toward the liquid flow outlet 5. In this case, it is possible to ensure that the distal end section 103 of the micropipette 102 is prevented from being excessively inserted into the insertion opening 2.

Then, as illustrated in Figures 3 and 4, a front end face of the liquid injection attachment 1 is pressed onto an upper face 200a of the micro-fluid chip 200. Specifically, a frontmost end portion 7a of the lip portion 7 is brought into contact with the periphery of the inlet 202 of the upper face 200a. When a load is applied to the liquid injection attachment 1 via the syringe 100, the lip portion 7 is compressed and deformed to generate a reaction force due to the compressive deformation. The reaction force causes a region including the frontmost end portion 7a (seal face) of the lip portion 7 to be in close contact with the upper face 200a of the micro-fluid chip 200.

By discharging the liquid E from the syringe 100 while the frontmost end portion 7a of the lip portion 7 is in close contact with the upper face 200a of the micro-fluid chip 200, the liquid E is injected into the inlet 202 from inside of the inner cylindrical surface 6 (from inside of the cylindrical body) through the liquid flow outlet 5 and the central portion of the lip portion 7. At this time, since the frontmost end portion 7a of the lip portion 7 is in close contact with the upper face 200a of the micro-fluid chip 200, the liquid E does not leak to the outside.

In this way, in the liquid injection attachment 1 of the present invention, the reaction force generated by the compressive deformation of the lip portion 7 is used during liquid injection. In other words, the reaction force from the lip portion 7 counteracts an injection pressure during liquid injection. Consequently, the liquid injection attachment 1 can provide better sealing performance, and introduce the liquid E into the microchannel 201 from the syringe 100 through the liquid flow outlet 5 and inlet 202 without leakage to the outside.
when the lip portion 7 as illustrated in the embodiment is pressed onto the upper face 200a of the micro-fluid chip 200, the contact pressure (seal contact pressure) peaks in the frontmost end portion 7a (a seal portion). Consequently, excellent sealing performance is provided, so that liquid leakage can be prevented during liquid injection.

In the liquid injection attachment 1, when the lip portion 7 is loaded, the distal end section 101 of the syringe 100 is supported in the periphery by the liquid injection attachment 1 of cylindrical shape. According to the liquid injection attachment 1, therefore, the lip portion 7 can easily be compressed and deformed with a small load during liquid injection, providing better sealing performance without deformation or damages of the distal end section 101.

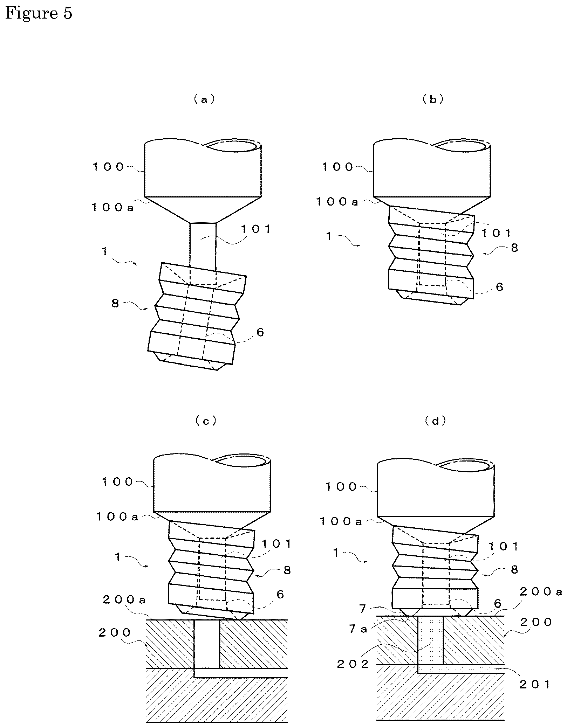

Description will be made to a liquid injection attachment according to one embodiment of the present invention that is used to inject liquid while it is incorrectly inserted (inclined) based on Figure 5.

Figure 5(a) is a side view illustrating the liquid injection attachment according to the embodiment of the present invention inclined with respect to a syringe, Figure 5(b) is a side view illustrating the inclined liquid injection attachment incorrectly inserted into the syringe, Figure 5(c) is a side view in which the incorrectly inserted liquid injection attachment is used, and Figure 5(d) is a side view in which the incorrectly inserted liquid injection attachment is used.

When as illustrated in Figure 5(a) the distal end section 101 of the syringe 100 is incorrectly inserted into the liquid injection attachment 1, so that the distal end section 101 is inclined with respect to the inner cylindrical surface 6, as illustrated in Figure 5(b), the liquid injection attachment 1 is easily curved in the direction in which the cylindrical axis is bent and the inner cylindrical surface 6 follows the distal end section 101 because at least part of the outer cylindrical surface is formed as the bellows-like portion 8. Then, when as illustrated in Figure 5(c) the front end face of the liquid injection attachment 1 is pressed onto the upper face 200a of the micro-fluid chip 200, the liquid injection attachment 1 is easily curved in the direction in which the cylindrical axis is bent without being buckled because at least part of the outer cylindrical surface is formed as the bellows-like portion 8, and as illustrated in Figure 5(d), the sealing performance of the lip portion 7 against the upper face 200a can be maintained.

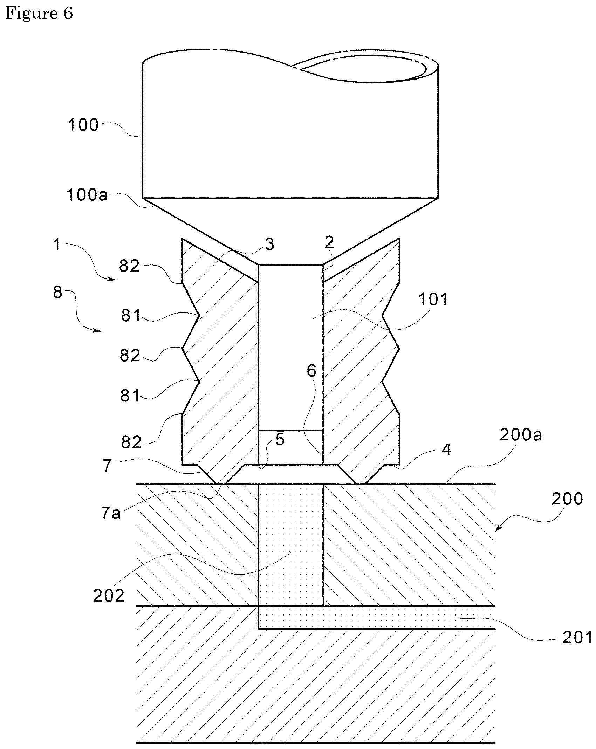

Description will be made to the liquid injection attachment according to one embodiment of the present invention that is used to inject liquid while a syringe is incorrectly inserted (insufficiently inserted) into the liquid injection attachment based on Figure 6.

Figure 6 is a sectional view in which the liquid injection attachment according to one embodiment of the present invention is used for a syringe and liquid is injected while the syringe is insufficiently inserted into the liquid injection attachment.

When as illustrated in Figure 6 the distal end section 101 of the syringe 100 is incorrectly inserted into the liquid injection attachment 1, so that the distal end section 101 is insufficiently inserted with respect to the inner cylindrical surface 6, for example, when an error exists such that the diameter of the distal end section 101 of the syringe 100 is larger than the specification, the insertion may be insufficient. Similarly in this case, a portion on the side of injection port of the distal end section 101 of the syringe 100 is easily compressed in the cylindrical axis direction without being buckled because the liquid injection attachment 1 has at least part of the outer cylindrical surface formed as the bellows-like portion 8, and the sealing performance against the upper face 200a by the lip portion 7 can be maintained.

### [Further Embodiment]

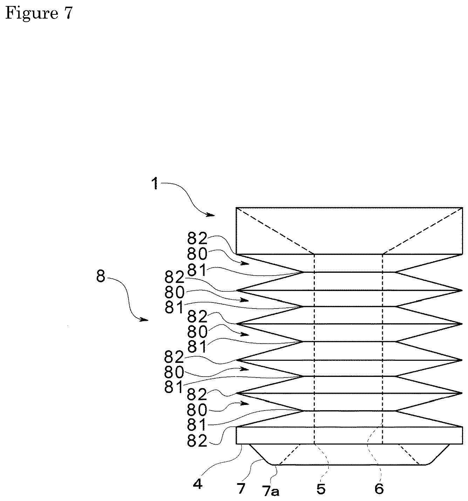

Figure 7 is a side view illustrating a liquid injection attachment according to a further embodiment of the present invention.

As illustrated in Figure 7, the bellows-like portion 8 of the liquid injection attachment 1 of the present invention may have deeper depths of the reduced-diameter deepest portions 81 (radial differences relative to the non-reduced-diameter portions 82) in the reduced-diameter portions 80, so that the number of reduced-diameter portions 80 may increase. With the bellows-like portion 8 of such shape, deformation in the cylindrical axis direction (compression) is further facilitated and deformation in the direction in which the cylindrical axis is bent (curved) is also further facilitated.

The liquid injection attachment 1 according to embodiments described above is integrally formed as a whole, has a simple structure, and thus entails lower manufacturing costs. Further, the liquid injection attachment 1 is disposal, and thus cleaning is eliminated. Consequently, the liquid may not be contaminated.

Furthermore, the liquid injection attachment 1 as described above can be applied to an automatic pipette device or a pipetting robot. Consequently, the injection operation can be automated. In addition, the liquid injection attachment 1 can be mounted to each distal end section of a multi-channel pipette to enable the liquid to be injected to more than one inlet at the same time.

### [Method for Injecting Liquid]

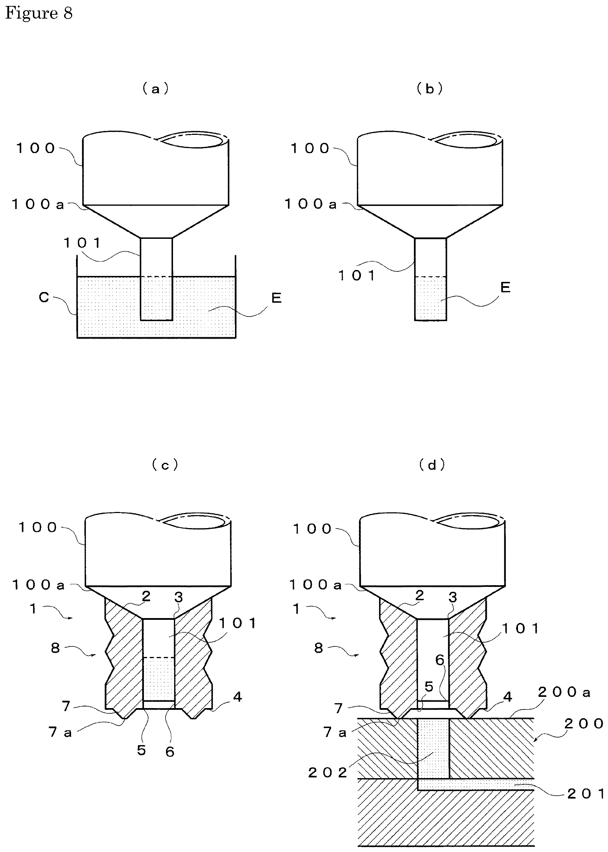

Description will now be made based on Figure 8 to an example of a method for injecting liquid using such a liquid injection attachment. Description will be made here to, as an example, how liquid is to be injected into a microchannel 201 in the micro-fluid chip 200 using the liquid injection attachment 1 illustrated in Figures 1 to 3.

First, the syringe 100 is used to suck or collect liquid E such as reagent contained in a sample container C (such as microtube, sample tube, vial, test tube, centrifuge tube, or conical tube) (Figure 8(a)).

Next, after the liquid E is sucked or collected, the syringe 100 is picked up from the sample container C (Figure 8(b)). At this time, the liquid injection attachment 1 is not yet mounted on the distal end section 101 of the syringe 100.

Next, the distal end section 101 of the syringe 100 is inserted into the insertion opening 2 of the liquid injection attachment 1 for mounting the liquid injection attachment 1 to the distal end section 101 (Figure 8(c)). The mounting of the liquid injection attachment 1 is completed when the inner cylindrical surface 6 is in close contact with the outer peripheral surface of the distal end section 101.

Next, the syringe 100 having the liquid injection attachment 1 mounted thereon is directed and pressed onto the inlet 202 of the micro-fluid chip 200. In other word, the lip portion 7 of the liquid injection attachment 1 is brought into contact with the upper face 200a around the inlet 202 (Figure 8(d)).

The frontmost end portion 7a of the lip portion 7 has a diameter larger than the bore of the inlet 202, and thus the lip portion 7 is brought into contact with the upper face 200a of the micro-fluid chip 200 around the inlet 202. Then, the syringe 100 is directed and pressed onto the inlet 202 to apply a load, which compresses and deforms the lip portion 7.

Next, the liquid E in the syringe 100 is injected into the microchannel 201 of the micro-fluid chip 200 by the injection pressure of the syringe 100 (Figure 8(d)). At this time, since the lip portion 7 is compressed and deformed to generate a reaction force, the liquid E does not leak to the outside. The liquid E is introduced into the microchannel 201 from the syringe 100 through the liquid flow outlet 5 of the liquid injection attachment 1 and the inlet 202.

According to the method for injecting liquid, to inject liquid from the syringe 100 to the inlet 202, better sealing effect produced by the lip portion 7 can prevent liquid leakage and liquid injection operation can be accomplished in a simple way without deformation or damages of the liquid injecting implement, only by mounting the liquid injection attachment 1 to the distal end section 101 of the syringe 100.

In the step of sucking or collecting the liquid E contained in the sample container C, since the liquid injection attachment 1 is not yet mounted to the distal end section 101 of the syringe 100, it is not dipped into the liquid E in the sample container C. In this way, dripping of liquid can be avoided.

Commercially available products without gasket can be used for the liquid injecting implement such as the syringe 100.

Furthermore, in the method for injecting liquid, an automatic pipette device or a pipetting robot can be used for mounting the liquid injection attachment 1 to the distal end section 101 of the syringe 100 or for pressing the syringe 100 onto the micro-fluid chip 200, and thus the liquid can be injected by a simple system configuration. In addition, the injection can be automated. Furthermore, when a multi-channel pipette is used, liquid can be injected into more than one micro-fluid chip 200 at the same time.

### EXPLANATIONS OF LETTERS OR NUMERALS

1: liquid injection attachment
2: insertion opening
3: rear end portion
4: front end portion
5: liquid flow outlet
6: inner cylindrical surface
7: lip portion
8: bellows-like portion
   80: reduced-diameter portion
   81: reduced-diameter deepest portion
   82: non-reduced-diameter portion
9: outer cylindrical surface
100: syringe (liquid injecting implement)
   100a: barrel distal end face
   101: distal end section
102: micropipette (liquid injecting implement)
103: distal end section
200: micro-fluid chip
   200a: upper face
   201: microchannel
   202: inlet
C: sample container
E: liquid

## Claims

1. A liquid injection attachment, wherein the liquid injection attachment is formed into a cylindrical body having, in a rear end portion, an insertion opening for receiving a distal end section of a liquid injecting implement inserted thereinto and a liquid flow outlet in a front end portion, the liquid injection attachment comprises a lip portion of an annulus shape that bulges on periphery of the liquid flow outlet, and at least one reduced-diameter portion is formed on an outer cylindrical surface of the cylindrical body.

2. The liquid injection attachment according to claim 1, wherein the liquid injection attachment is integrally formed of a rubber-like elastic body.

3. The liquid injection attachment according to claim 1 or 2, wherein the rubber-like elastic body is any of silicone rubber, fluororubber, acrylic rubber, nitrile rubber, and butyl rubber.
